# EUROPÄISCHE PATENTSCHRIFT

(11) **EP 3 067 873 B1**
(45) Veröffentlichungstag und Bekanntmachung des Hinweises auf die Patenterteilung: **08.04.2020**
(21) Anmeldenummer: 16000322.4
(22) Anmeldetag: 10.02.2016
(51) Int. Cl.: G08G 1/0962

(54) **VERFAHREN ZUR GEMEINSAMEN DARSTELLUNG SICHERHEITSKRITISCHER UND NICHT-SICHERHEITSKRITISCHER INFORMATIONEN UND ANZEIGEVORRICHTUNG**
METHOD FOR SIMULTANEOUSLY REPRESENTING SAFETY CRITICAL AND NON-SAFETY CRITICAL INFORMATION AND DISPLAY DEVICE
PROCEDE DE REPRESENTATION COMMUNE D'INFORMATIONS CRITIQUES EN TERMES DE SECURITE ET NON CRITIQUES EN TERMES DE SECURITE ET AFFICHEUR

(30) Priorität: 10.03.2015 DE 102015002973
(43) Veröffentlichungstag der Anmeldung: 14.09.2016
(73) Patentinhaber: Airbus Defence and Space GmbH, 82024 Taufkirchen (DE)
(72) Erfinder: MEILINGER, Jürgen, 85283 Wolnzach (DE); SCHNEIDER, Ulrich, 87477 Sulzberg (DE)
(74) Vertreter: LKGLOBAL Lorenz & Kopf PartG mbB Patentanwälte

(56) Entgegenhaltungen:
- WO-A1-2014/061386
- DE-A1- 4 323 082
- DE-A1-102005 029 800
- US-A1- 2012 242 505
- US-A1- 2014 225 753

## Beschreibung

Verschiedene Ausführungsformen betreffen allgemein ein Verfahren zur gemeinsamen Darstellung sicherheitskritischer und nicht-sicherheitskritischer Informationen auf einer Anzeigevorrichtung.

Durch die Entwicklung kostengünstiger und großflächiger Bildschirme, z.B. LCD-Displays, LED-Displays oder OLED-Displays, geht auch die Entwicklung im Cockpit-Bereich von Fahrzeugen bzw. Luftfahrzeugen und Kraftfahrzeugen immer weiter dahin, viele Informationen über das Fahrzeug und Informationen der Fahrzeugnavigation auf einem gemeinsamen großflächigen Displays darzustellen. Hierbei werden sicherheitskritische Informationen und nicht-sicherheitskritische Informationen gemeinsam auf einem Bildschirm dargestellt. Hierbei kann es jedoch unter Umständen passieren, dass durch die Fülle an Informationen die für den Betrieb des Fahrzeugs sicherheitskritische Informationen übersehen werden können.

Die US 2015/0279260 A1 offenbart eine Anpassung der Bildschirmhelligkeit eines Displays, ohne dabei die Helligkeit einer Hintergrundbeleuchtung einzustellen. Ein RGB-Werteinsteller passt die Werte von RGB-Komponenten für jede Information an, die in jeder der Ebenen eines Informationsanzeigers gespeichert ist. Ein Anzeigeinformationsgenerator überlagert Informationen, in denen die Werte der RGB-Komponenten eingestellt und in jeder der Ebenen gespeichert sind und zeigt die überlagerte Information auf dem Informationsanzeiger an.

Davon ausgehend ist es Aufgabe der Erfindung, ein Verfahren anzugeben, die die gemeinsame Darstellung von sicherheitskritischen und nicht-sicherheitskritischen Informationen verbessert.

Diese Aufgabe wird mit einem Verfahren mit den Merkmalen des Anspruchs 1 und einer Vorrichtung mit den Merkmalen des Anspruchs 6 gelöst. Beispielhafte Ausführungsformen sind in den abhängigen Ansprüchen dargestellt. Es sei darauf hingewiesen, dass die Merkmale der Ausführungsbeispiele der Vorrichtungen auch für Ausführungsformen des Verfahrens sowie Verwendung der Vorrichtung gelten und umgekehrt.

Die Aufgabe wird durch ein Verfahren zur gemeinsamen Darstellung sicherheitskritischer und nicht-sicherheitskritischer Informationen auf einer Anzeigeeinheit eines Fahrzeugs gelöst, wobei das Verfahren, das Empfangen von nicht-sicherheitskritischen Informationen und Erzeugen wenigstens einer grafischen Präsentation der nicht-sicherheitskritischen Informationen umfasst. Das Verfahren umfasst weiter das Empfangen von sicherheitskritischen Informationen und Erzeugen wenigstens einer grafischen Präsentation der sicherheitskritischen Informationen. Weiter umfasst das Verfahren das Darstellen der Präsentationen sicherheitskritischer und nicht-sicherheitskritischer Informationen auf der Anzeigeeinheit, wobei die Darstellung wenigstens zwei Darstellungsebenen aufweist. Bei dem Verfahren wird die Präsentation der nicht-sicherheitskritischen Informationen in Blickrichtung des Betrachters auf einer hinteren der wenigstens zwei Darstellungsebenen dargestellt und die Präsentation der sicherheitskritischen Informationen wird auf einer vorderen Darstellungsebene dargestellt. Bei dem Verfahren wird überprüft, ob bei einer wenigstens teilweisen Überlagerung die Präsentation der nicht-sicherheitskritischen Informationen von der Präsentation der sicherheitskritischen Informationen, die sicherheitskritischen Informationen erkennbar sind.

Der Erfindung liegt der Gedanke zugrunde, das bei einer Darstellung sicherheitskritischer und nicht-sicherheitskritischer auf einer gemeinsamen Anzeigeeinheit (Display) die nicht-sicherheitskritischen Informationen im Hintergrund, d.h. auf einer rückwärtigen bzw. unteren Darstellungsebene aus Sicht des Betrachters dargestellt, werden. Die sicherheitskritischen Informationen werden im Vordergrund, d.h. auf einer vorderen, bzw. oberen Darstellungsebene aus Sicht des Betrachters dargestellt. Hierbei wird bei einer Überlagerung von sicherheitskritischen Informationen auf der vorderen Darstellungsebene überprüft, ob bei einer Überlagerung dieser Darstellung mit der Darstellung der nicht-sicherheitskritischen Informationen auf der hinteren Darstellungsebene, die sicherheitskritischen Informationen weiterhin gut erkennbar sind. Dies hat den Vorteil, dass bei der gemeinsamen Darstellung von sicherheitskritischen Informationen und nicht-sicherheitskritischen Informationen die sicherheitskritischen Informationen jederzeit erkennbar sind.

Erfindungsgemäß werden bei dem Verfahren, wenn bei der Überprüfung festgestellt wird, dass die Präsentation der nicht-sicherheitskritischen Informationen von der Präsentation der sicherheitskritischen Informationen überlagert wird, wenigstens die überlagernden Teile der Präsentation der sicherheitskritischen Informationen derart angepasst, dass die sicherheitskritischen Informationen erkennbar sind.

Dies hat den Vorteil, dass durch Anpassung von wenigsten den überlagernden Teilen der Präsentation der sicherheitskritischen Informationen die Erkennbarkeit der sicherheitskritischen Informationen verbessert wird. Dadurch wird sichergestellt, dass der Betrachter die sicherheitskritischen Informationen bei einer gemeinsamen Darstellung von sicherheitskritischen und nicht-sicherheitskritischen gut erkennen kann.

Bevorzugt werden bei dem Verfahren wenigstens Teile der Präsentation der sicherheitskritischen Informationen derart angepasst, indem die grafische Präsentation der überlagernden Teile als solche verändert wird. Durch eine Veränderung der grafischen Präsentation der überlagernden Teile wird die Erkennbarkeit verbessert und es wird sichergestellt, dass der Betrachter die sicherheitskritischen Informationen bei einer gemeinsamen Darstellung von sicherheitskritischen und nicht-sicherheitskritischen gut erkennen kann. Dies hat den Vorteil, dass sicherheitskritische Informationen gut erkennbar sind.

Bevorzugt erfolgt bei dem Verfahren die Veränderung der grafischen Präsentation durch eine Farbänderung, eine Linienänderung, eine Größenänderung, eine Kontraständerung und/oder eine Änderung der Darstellungsfrequenz. Um bei einer Überlagerung von Teilen der Präsentation der nicht-sicherheitskritischen Informationen durch die sicherheitskritischen Informationen sicherzustellen, dass die sicherheitskritischen Informationen weiterhin erkennbar sind, kann beispielsweise die Präsentation wenigsten in den überlagernden Teilen durch eine Farbänderung, eine Linienänderung, eine Größenänderung, eine Kontraständerung und/oder eine Änderung der Darstellungsfrequenz verändert werden. Bevorzugt wird eine Darstellung gewählt, die sich möglichst gut von der überlagerten Darstellung der Information unterscheidet. Beispielweise wird bei einer Überlagerung von zwei gleichfarbigen und gleichdicken Linien die Linienfarbe und/oder die Liniendicke der Präsentation der sicherheitskritischen Informationen in dem überlagernden Bereich derart verändert, dass sich die Präsentationen möglichst gut unterscheiden lassen und die Präsentation der sicherheitskritischen Informationen sicher erkennbar ist. Beispielsweise wird die Linienstärke der sicherheitskritischen Information stark erhöht. Dadurch hebt sich die Linie der sicherheitskritischen Information stark von der Liniendarstellung der nicht-sicherheitskritischen Information ab. Hierbei kann es vorkommen, dass die Präsentation der nicht-sicherheitskritischen Informationen wenigstens teilweise von der Präsentation der sicherheitskritischen Informationen derart überdeckt ist, dass die Präsentation der nicht-sicherheitskritischen Informationen wenigstens zeitweise für den Betrachter nicht erkennbar ist. Durch dieses Verfahren wird jedoch sichergestellt, dass die sicherheitskritischen Informationen immer für den Betrachter erkennbar sind. Dies hat den Vorteil, dass für den Betrieb eines Fahrzeugs die dauerhafte Erkennbarkeit der sicherheitskritischen Informationen gegeben ist.

Bevorzugt enthalten bei dem Verfahren die sicherheitskritischen Informationen fahrzeugkritische Informationen und die nicht-sicherheitskritischen Informationen navigationskritische und/oder missionskritische Informationen. Die sicherheitskritischen Informationen sind beispielsweise derartige Informationen die für den Betrieb des Fahrzeugs sicherheitskritisch sind und somit von wesentlicher Bedeutung sind. Bei einem Flugzeug ist beispielsweise die Information über die noch vorhandene Kerosinmenge oder beispielsweise die Flughöhe von wesentlicher Bedeutung. Wohingegen Informationen, die für die Navigation oder eine Mission, beispielsweise Wegpunkte, notwendig sind, für die eigentliche Sicherheit des Fahrzeugs nur zweitrangig sind und können wenigstens zeitweise von der Präsentation der sicherheitskritischen Information überlagert werden.

Bevorzugt weist das Verfahren weiter den Schritt auf, dass die sicherheitskritischen Informationen und die nicht-sicherheitskritischen Informationen gemeinsam empfangen werden und nach vorbestimmten Kriterien in die sicherheitskritischen Informationen und die nicht-sicherheitskritischen Informationen getrennt werden. Gemäß einer Ausführungsform werden alles Informationen, die beispielsweise von Sensoren in dem Fahrzeug zur Verfügung gestellt empfangen werden, nach vorbestimmten Kriterien in sicherheitskritische Informationen und nicht-sicherheitskritische Informationen kategorisiert. Die Kriterien können hierbei beispielsweise abhängig von der jeweiligen Flugsituation beispielsweise dynamisch angepasst werden. Alternativ können die Kriterien für bestimmte Flugsituationen auch, beispielsweise vor dem Beginn des Flugs, vorgegeben sein. Dies hat den Vorteil, dass empfangene Informationen angepasst an die jeweilige Situation in sicherheitskritische und nicht-sicherheitskritische Informationen unterteil werden können.

Weiter wird die Aufgabe durch eine Anzeigevorrichtung zur gemeinsamen Darstellung sicherheitskritischer und nicht-sicherheitskritischer Informationen auf einer Anzeigeeinheit (Display) gelöst, die wenigstens einen ersten Empfänger, eingerichtet zum Empfangen von nicht-sicherheitskritischen Informationen;
wenigsten einen ersten Prozessor, eingerichtet zum Erzeugen wenigstens einer Präsentation der nicht-sicherheitskritischen Informationen. Weiter weist die Anzeigevorrichtung wenigstens einen zweiten Empfänger auf, der eingerichtet ist zum Empfangen von sicherheitskritischen Informationen. Die Anzeigevorrichtung weist weiter wenigsten einen zweiten Prozessor auf, der eingerichtet ist zum Erzeugen wenigstens einer Präsentation der sicherheitskritischen Informationen. Weiter weist die Anzeigevorrichtung eine Darstellungseinheit auf, die eingerichtet ist zum gemeinsamen Darstellen der Präsentationen sicherheitskritischer und nicht-sicherheitskritischer Informationen auf der Anzeigeeinheit, wobei die Darstellung wenigstens zwei Darstellungsebenen aufweist. Bei der Anzeigevorrichtung ist die Präsentation der nicht-sicherheitskritischen Informationen in Blickrichtung eines Betrachters auf einer hinteren der wenigstens zwei Darstellungsebenen dargestellt und die Präsentation der sicherheitskritischen Informationen ist auf einer vorderen Darstellungsebene dargestellt. Bei der Anzeigevorrichtung ist der zweite Prozessor weiter eingerichtet, zu überprüfen, ob bei einer wenigstens teilweisen Überlagerung die Präsentation der nicht-sicherheitskritischen Informationen von der Präsentation der sicherheitskritischen Informationen, die sicherheitskritischen Informationen erkennbar sind.

Durch die Erzeugung einer Präsentation mit nicht-sicherheitskritischen Informationen als Hintergrundbild und einer Präsentation mit sicherheitskritischen Informationen im Vordergrund wird sichergestellt, dass die sicherheitskritischen Informationen weiterhin sichtbar sind.

Gemäß einer Ausführungsform kann der erste Empfänger auch Teil des ersten Prozessors sein, oder in diesem integriert sein. Weiter kann gemäß einer weiteren Ausführungsform der zweite Empfänger auch Teil des zweiten Prozessors sein, oder in diesem integriert sein. Dies hat den Vorteil, dass eine höhere Integration erreicht werden kann.

Bevorzugt ist der zweite Prozessor ein DAL-A und/oder DAL-B sicherheitszertifizierter Prozessor. In der Luftfahrt werden beispielsweise fünf Sicherheitsstufen, auch als DAL (Design Assurance Level)Stufen DAL A bis DAL E bezeichnet, verwendet. Die verschiedenen Stufen werden über eine Richtlinie zur Zertifizierung von Avionik-Software festgelegt. Hierbei bezeichnet DAL-A "katastrophale"-Auswirkungen - auf das Flugzeug bei einem Ausfall - bis DAL-E "keine Auswirkungen". Je nach den Funktionen, die eine Software oder eine Hardware erfüllen soll, kann sie die Sicherheit des Flugzeugs mehr oder weniger gefährden. Je nach den Gefährdungsauswirkungen werden unterschiedliche Anforderungen an den Entwicklungsprozess gestellt. Als DAL-A und/oder DAL-B steht jedoch nur eine beschränkte Anzahl von Prozessoren zur Verfügung. Beispielsweise ist die Verwendung von Multikern-Prozessoren für eine DAL-A bzw. DAL-B kritische Verwendung in der Regel nur sehr eingeschränkt oder nicht möglich, da diese Prozessoren häufig nicht oder nur sehr eingeschränkt die erforderliche Sicherheit, Vorhersagbarkeit und den benötigten Determinismus aufweisen.

Erfindungsgemäß ist der zweite Prozessor ein Grafikprozessor und/oder Videoprozessor. Der Grafikprozessor und/oder Videoprozessor ist erfindungsgemäß eingerichtet, wenn wenigstens Teile der Präsentation der nicht-sicherheitskritischen Informationen von der Präsentation der sicherheitskritischen Informationen überlagert sind, wenigstens die überlagernden Teile der Präsentation der sicherheitskritischen Informationen derart anzupassen, dass die sicherheitskritischen Informationen erkennbar sind. Beispielweise ist der zweite Prozessor ein FPGA (Field Programmable Gate Array)-Prozessor. FPGA-Prozessoren für DAL-A oder DAL-B kritische Anwendungen sind verfügbar, weisen jedoch im Vergleich zu aktuellen Multicore-Prozessoren eine im Wesentlichen geringere Rechenleistung auf. Der erste Prozessor kann beispielsweis ein Multicore-Prozessor sein, da er nur nicht-sicherheitskritische Informationen verarbeitet. Die nicht-sicherheitskritischen Informationen sind in der Regel im Vergleich zu den sicherheitskritischen Informationen umfangreicher und erfordern daher auch mehr Rechenleistung für die Darstellung.

Durch die Trennung des rechenintensiveren Teils für die Darstellung der nicht-sicherheitskritischen Informationen und der vergleichsweise weniger rechenintensiven Darstellung der sicherheitskritischen Informationen können auch großformatige Displays eingesetzt werden, wobei sichergestellt ist, dass die sicherheitskritischen Informationen von einem zulassbaren bzw. zugelassenen Prozessor verarbeitet werden.

Bevorzugt ist der zweite Prozessor eingerichtet, Teile der Präsentation der sicherheitskritischen Informationen derart anzupassen, dass die grafische Präsentation der überlagernden Teile als solche verändert ist.

Bevorzugt ist der zweite Prozessor eingerichtet, die grafische Präsentation durch eine Farbänderung, eine Linienänderung, eine Größenänderung, eine Kontraständerung und/oder eine Änderung der Darstellungsfrequenz anzupassen.

Bevorzugt enthalten die sicherheitskritischen Informationen fahrzeugkritische Informationen. Die nicht-sicherheitskritischen Informationen enthalten bevorzugt navigationskritische und/oder missionskritische Informationen.

Bevorzugt weist die Anzeigevorrichtung wenigstens einen dritten Prozessor auf, der eingerichtet ist, eine Mehrzahl von unterschiedlichen Informationen von dem Fahrzeug zu empfangen, die empfangenen Informationen nach vorbestimmten Kriterien in die sicherheitskritischen Informationen und die nicht-sicherheitskritischen Informationen zu kategorisieren und entsprechend der Kategorisierung an die Empfänger für sicherheitskritische Informationen und nicht-sicherheitskritische Informationen weiterzuleiten.

Weiter wird die Aufgabe durch ein Fahrzeug gelöst, das eine zuvor beschriebene Anzeigevorrichtung aufweist. Beim Betrieb eines Fahrzeugs werden eine Vielzahl von Daten ermittelt die dem Fahrer des Fahrzeugs auf einer gemeinsamen Anzeigeeinheit (Display) angezeigt werden. Hierbei ist es für die Sicherheit des Fahrzeugs wichtig, dass die Fahrzeugsicherheitskritischen Daten immer erkennbar sind. Nicht-sicherheitskritische Daten, wie beispielsweise Daten die der Navigation des Fahrzeugs dienen, können zumindest zeitweilig für den Fahrer nicht erkennbar sein, da die Sicherheit des Fahrzeugs dadurch nicht gefährdet wird.

Für die Zulassung der Anzeigevorrichtung zur Verwendung bei der Verarbeitung von sicherheitskritischen Informationen ist es in der Regel erforderlich, wenn derjenige bzw. diejenigen Prozessoren, die sicherheitskritische Informationen verarbeiten eine entsprechende Zulassung besitzen. Für die Verarbeitung von nicht-sicherheitskritischen Informationen kann beispielsweise ein nicht zugelassener Prozessor verwendet werden. Vorzugsweise sind somit wenigstens der zweite Prozessor und/oder der dritte Prozessor derartige zugelassene bzw. zulassbare Prozessoren.

Bevorzugt ist das Fahrzeug ein Luftfahrzeug. Die Anzeigevorrichtung ist bevorzugt im Cockpit des Luftfahrzeugs angeordnet. Die zuvor beschrieben Anzeigevorrichtung ist beispielsweise in einen Flugzeugcockpit einsetzbar. Durch die Verwendung einer einzelnen Anzeigeeinheit (Display) kann diese, im Vergleich zu der Verwendung von mehreren kleinen Displays, mehrere Informationen über den Flugzeugzustand, die Flugroute, die Flugmission oder dergleichen darstellen. Insbesondere bei Flugzeugen ist es von wesentlicher Bedeutung, die sicherheitskritischen Informationen jederzeit präsentiert zu bekommen und diese zu erkennen, da beispielsweise ein technisches Problem mit einem Triebwerk sofort erkannt werden muss, um gegebenenfalls sofort notwendige Gegenmaßnahmen einleiten zu können. Sind derart sicherheitskritische Informationen auch nur für kurze Zeit vom Piloten nicht mehr erkennbar, kann es unter Umständen zu größeren Problemen kommen, als wenn die Informationen jederzeit erkennbar sind und der Pilot sofort die notwendigen Maßnahmen ergreifen kann.

In den Zeichnungen beziehen sich im Allgemeinen gleiche Bezugszeichen auf die gleichen Teile über die verschiedenen Ansichten hinweg, soweit dies zweckmäßig ist. Die Zeichnungen sind nicht notwendigerweise maßstabsgetreu; Wert wird stattdessen im Allgemeinen auf die Veranschaulichung der Prinzipien der Erfindung gelegt. In der folgenden Beschreibung werden verschiedene Ausführungsformen der Erfindung beschrieben unter Bezugnahme auf die folgenden Zeichnungen, in denen:
- FIG. 1: ein Ablaufdiagramm für eine Ausführungsform des Verfahrens zeigt;
- FIG. 2: den Aufbau einer Ausführungsform der Vorrichtung zeigt;
- FIG. 3: den Aufbau einer weiteren Ausführungsform der Vorrichtung zeigt;
- FIG. 4: eines Ausführungsform der gemeinsamen Darstellung von Informationen zeigt; und
- FIG. 5: die eine getrennte Anzeigevorrichtung für sicherheitskritische und nicht-sicherheitskritische Informationen zeigt.

Die folgende detaillierte Beschreibung nimmt Bezug auf die beigefügten Zeichnungen, welche zur Erläuterung spezifische Details und Ausführungsformen zeigen, in welchem die Erfindung praktiziert werden kann.

Das Wort "beispielhaft" wird hierin verwendet mit der Bedeutung "als ein Beispiel, Fall oder Veranschaulichung dienend". Jede Ausführungsform oder Ausgestaltung, die hierin als "beispielhaft" beschrieben ist, ist nicht notwendigerweise als bevorzugt oder vorteilhaft gegenüber anderen Ausführungsformen oder Ausgestaltungen auszulegen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung.

Bei den hier beschriebenen Verfahren können die Schritte in nahezu jeder beliebigen Reihenfolge ausgeführt werden, ohne von den Prinzipien der Erfindung abzuweichen, wenn nicht ausdrücklich eine zeitliche oder funktionale Abfolge aufgeführt ist. Des Weiteren können angegebene Schritte gleichzeitig ausgeführt werden, wenn nicht eine ausdrückliche Formulierung im Anspruch darlegt, dass sie separat auszuführen sind.

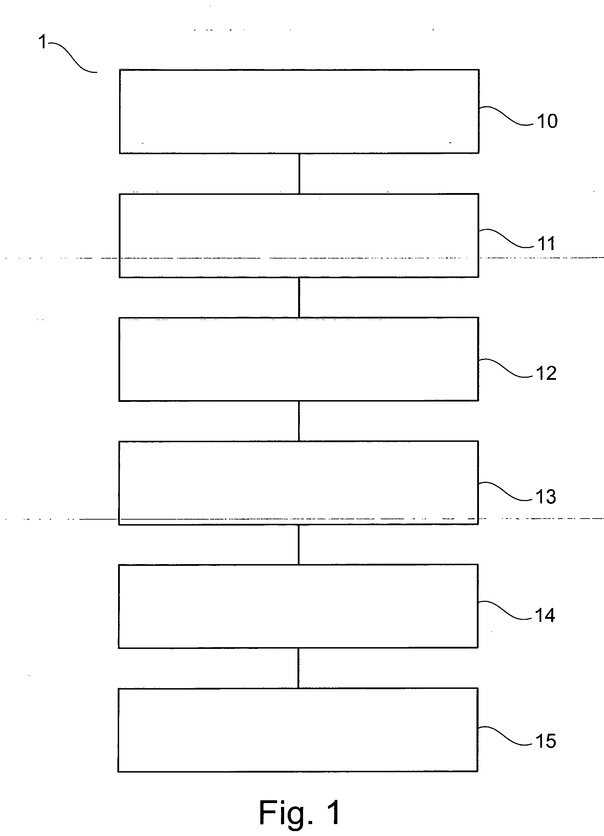

Figur 1 zeigt ein Ablaufdiagramm 1 für eine Ausführungsform des Verfahrens zur gemeinsamen Darstellung sicherheitskritischer und nicht-sicherheitskritischer Informationen auf einer Anzeigeeinheit (Display) eines Fahrzeugs. In Schritt 10 werden nicht-sicherheitskritischen Informationen empfangen. In Schritt 11 wird wenigstens einer grafischen Präsentation der nicht-sicherheitskritischen Informationen erzeugt. In Schritt 12 werden sicherheitskritische Informationen empfangen. In Schritt 13 wird wenigstens eine grafische Präsentation der sicherheitskritischen Informationen erzeugt. In Schritt 14 werden die Präsentationen sicherheitskritischer und nicht-sicherheitskritischer Informationen auf der Anzeigeeinheit dargestellt, wobei die Darstellung wenigstens zwei Darstellungsebenen aufweist. Die Präsentation der nicht-sicherheitskritischen Informationen ist in Blickrichtung des Betrachters auf einer hinteren der wenigstens zwei Darstellungsebenen dargestellt und die Präsentation der sicherheitskritischen Informationen ist auf einer vorderen Darstellungsebene dargestellt. In Schritt 15 wird überprüft, ob bei einer wenigstens teilweisen Überlagerung die Präsentation der nicht-sicherheitskritischen Informationen von der Präsentation der sicherheitskritischen Informationen, die sicherheitskritischen Informationen erkennbar sind.

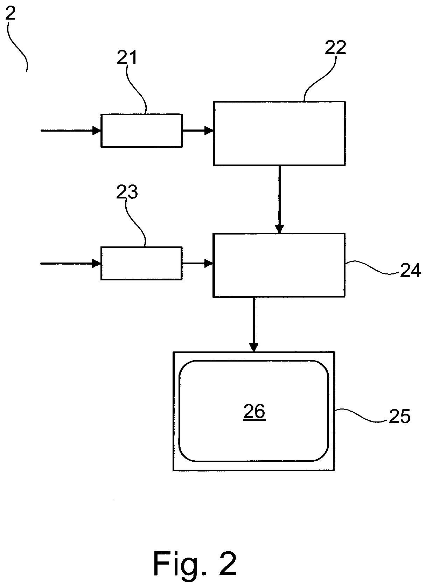

Figur 2 zeigt den Aufbau einer Ausführungsform der Vorrichtung 2 zur gemeinsamen Darstellung sicherheitskritischer und nicht-sicherheitskritischer Informationen auf einer Anzeigeeinheit 26. Die Vorrichtung weist wenigstens einen ersten Empfänger 21 auf. Der erste Empfänger 21 ist eingerichtet zum Empfangen von nicht-sicherheitskritischen Informationen. Die Vorrichtung 2 weist weiter wenigstens einen ersten Prozessor 22 auf. Der erste Prozessor 22 ist eingerichtet zum Erzeugen wenigstens einer Präsentation der nicht-sicherheitskritischen Informationen. Die Vorrichtung 2 weist wenigstens einen zweiten Empfänger 23 auf. Der Empfänger 23 ist eingerichtet zum Empfangen von sicherheitskritischen Informationen. Die Vorrichtung weist weiter wenigsten einen zweiten Prozessor 24 auf. Der zweite Prozessor 24 ist eingerichtet zum Erzeugen wenigstens einer Präsentation der sicherheitskritischen Informationen. Die Vorrichtung weist eine Darstellungseinheit 25 auf, die eingerichtet ist zum gemeinsamen Darstellen der Präsentationen sicherheitskritischer und nicht-sicherheitskritischer Informationen auf der Anzeigeeinheit (Display) 26. Die Darstellung weist wenigstens zwei Darstellungsebenen auf. Die Präsentation der nicht-sicherheitskritischen Informationen ist hierbei in Blickrichtung eines Betrachters auf einer hinteren der wenigstens zwei Darstellungsebenen dargestellt ist. Die Präsentation der sicherheitskritischen Informationen ist auf einer vorderen Darstellungsebene dargestellt. Der zweite Prozessor 24 ist weiter eingerichtet, zu überprüfen, ob bei einer wenigstens teilweisen Überlagerung die Präsentation der nicht-sicherheitskritischen Informationen von der Präsentation der sicherheitskritischen Informationen, die sicherheitskritischen Informationen erkennbar sind.

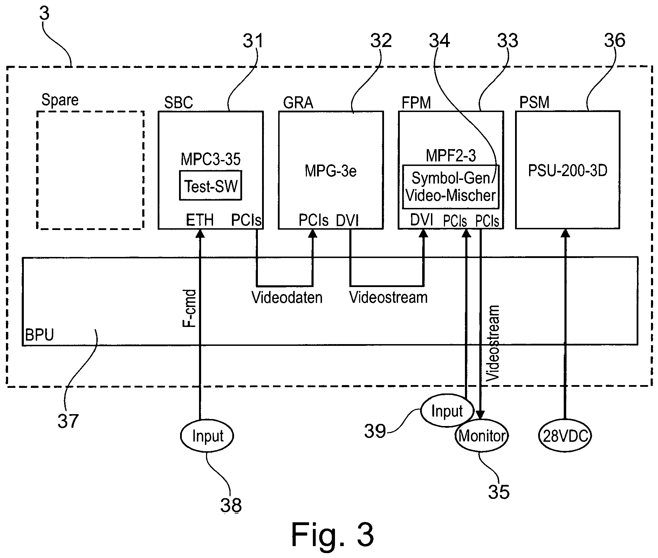

Figur 3 zeigt den Aufbau einer weiteren Ausführungsform der Vorrichtung 3 zur gemeinsamen Darstellung sicherheitskritischer und nicht-sicherheitskritischer Informationen auf einer Anzeigeeinheit 35. Die Vorrichtung 3 umfasst eine erste Recheneinheit 31, beispielsweise einen Singleboard Computer (SBC) der nicht-sicherheitskritische Informationen 38 empfängt und aus den empfangenen Informationen eine grafische Präsentation der Information als Bild- und/oder Videodaten erzeugt. Die Bild- und/oder Videodaten werden an eine Grafikeinheit 32 weitergeleitet, die aus den Bild- und/oder Videodaten einen Bild- und/der Videodatenstrom bzw. ein Videobild erzeugt, der an einen Bild-/Videomischer 34 übergeben wird. Der Mischer 34 ist beispielsweise Bestandteil eines FPGA-Moduls 33. Das FPGA-Modul 33 empfängt die sicherheitskritischen Informationen 39 und überprüft diese beispielsweise auf die Einhaltung von Deadlines, Vollständigkeit oder dergleichen. Der Mischer 34 empfängt von der Grafikeinheit 32 das Videobild mit der Präsentation der nicht-sicherheitskritischen Informationen 38. Das empfangene Videobild wir beispielsweise darauf überprüft, ob der Empfang innerhalb einer vorgegebenen Zeit erfolgt, ob das Videobild vollständig ist, ob die Orientierung des Bildes korrekt ist oder dergleichen. Das FPGA-Modul 33 erzeugt aus den empfangenen sicherheitskritischen Informationen 39 eine Präsentation als Videobild. Der Mischer 34 stellt einen Überlagerungsmechanismus bereit. Der Überlagerungsmechanismus umfasst beispielsweise die Überprüfung des Bereichs, in dem die sicherheitskritischen Informationen 39 dargestellt werden sollen, auf beispielsweise Kontraste und/oder Helligkeiten oder dergleichen. Darüber hinaus stellt der Mischer 34 beispielsweise einen kontrastreichen und/oder helligkeitsrelevanten Modus als Text und/oder Grafik, beispielsweise für die Flughöhe und/oder einen künstlichen Horizont, bereit. Der Mischer 34 erstellt aus der hinteren Ebene mit der Präsentation der nicht-sicherheitskritischen Informationen 38 und der vorderen Ebene mit der Präsentation der sicherheitskritischen Informationen 39 ein Gesamtbild. Der Mischer 34 überprüft weiter das Gesamtbild bei der Darstellung der sicherheitskritischen Informationen, beispielsweise der flugkritischen Informationen, auf aufgetretene Bilder. Genauer gesagt wird die Lesbarkeit bzw. Erkennbarkeit der Präsentation der sicherheitskritischen Informationen durch Bildüberprüfung, d.h. jedes einzelnen Bildes des anzuzeigenden Bildstroms, sichergestellt.

Darüber hinaus wird beispielsweise bei der Verwendung eines Panorama-Displays 35 als Anzeigevorrichtung überprüft welcher Teil des Panorama-Displays 35 aktuell aktiv ist. Aus Sicherheitsgründen muss ein Panorama-Display 35 beispielsweise im Flugzeug aus mindestens zwei Teilen bestehen. Sollte ein Teil des Gesamtdisplays ausfallen, erfolgt die Darstellung des Gesamtbildes, mit entsprechender Skalierung, auf dem verbleibenden funktionierenden Teil des Gesamtdisplays. Der Mischer 34 skaliert das erzeugte Gesamtbild auf alle aktiven Bereiche des Panorama-Displays 35, überprüft die Skalierung und gibt das Gesamtbild ans das Panorama-Displays 35 aus. Die Anzeigevorrichtung 3 weist in der dargestellten Ausführungsform darüber hinaus eine (Not-)Stromversorgung 36 auf. Der Datenstrom zwischen den Bestandteilen der Anzeigevorrichtung 3 erfolgt in der dargestellten Ausführungsform über einen gemeinsamen Datenbus 37.

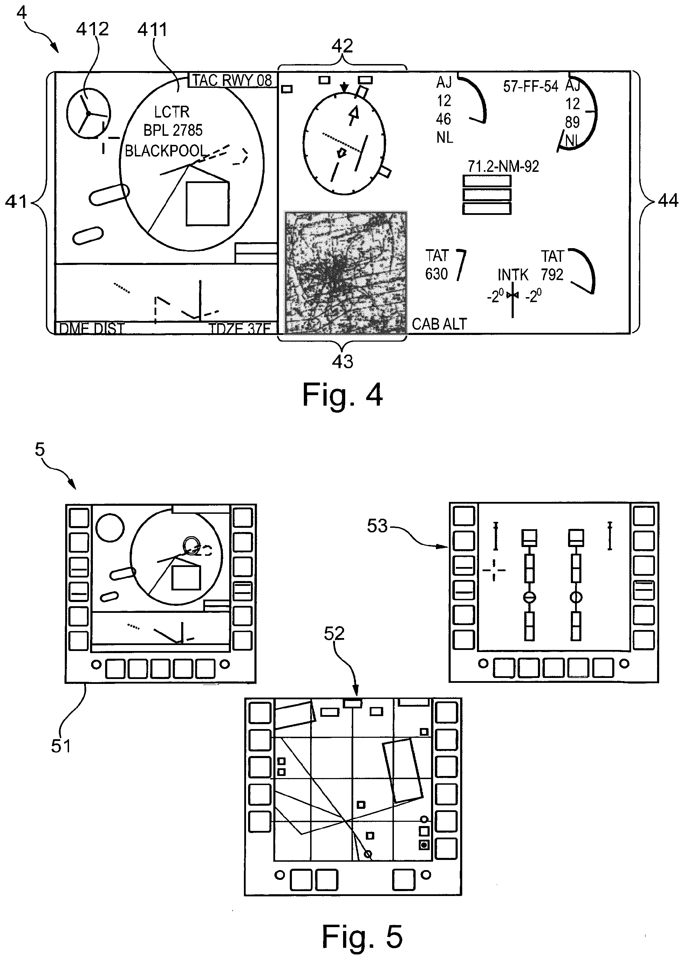

Figur 4 zeigt eine Ausführungsform der gemeinsamen Darstellung von sicherheitskritischen und nicht-sicherheitskritischen Informationen auf einer gemeinsamen Anzeigeeinheit (Display) 4. Hierbei zeigt der erste Displaybereich 41 des Displays 4 beispielsweise als nicht-sicherheitskritische Informationen 411, Missionsdaten. Zusätzlich zu den nicht-sicherheitskritische Informationen 411 sind beispielsweise weitere sicherheitskritische Informationen 412 mit dargestellt. Um immer die Erkennbarkeit der sicherheitskritischen Informationen 412 zu gewährleisten, ist die Präsentation der nicht-sicherheitskritischen Informationen 411 in Blickrichtung des Betrachters auf einer hinteren der wenigstens zwei Darstellungsebenen dargestellt und die Präsentation der sicherheitskritischen Informationen 412 ist auf einer vorderen Darstellungsebene dargestellt. Der zweite Bereich 42 des Displays zeigt beispielsweise als nicht-sicherheitskritische Information Navigationsdaten wie einen Kompass. Der dritte Bereich 43 des Displays zeigt als nicht-sicherheitskritische Information beispielsweise eine Landkarte. Der vierte Displaybereich 44 zeigt als sicherheitskritische Information beispielsweise verschiedene Informationen zu dem Zustand der Triebwerke des Flugzeugs.

Figur 5 zeigt eine getrennte Anzeigevorrichtung 5 für sicherheitskritische und nicht-sicherheitskritische Informationen. Eine derartige Anzeigevorrichtung 5 findet sich, in der dargestellten Anordnung oder einen anderen Anordnung, beispielsweise in vielen Cockpits von modernen Flugzeugen. Hierbei zeigt beispielsweise das erste Display 51 nicht-sicherheitskritische Informationen, wie Missionsdaten.

Das zweite Display 52 zeigt ebenfalls nicht-sicherheitskritische Informationen, wie Navigationsdaten und eine Landkarte. Das dritte Display 53 zeigt hingegen sicherheitskritische Informationen, wie beispielsweise verschiedene Informationen zu dem Zustand der Triebwerke des Flugzeugs.

Obwohl die Erfindung vor allem unter Bezugnahme auf bestimmte Ausführungsformen gezeigt und beschrieben worden ist, sollte von denjenigen, die mit dem Fachgebiet vertraut sind, verstanden werden, dass zahlreiche Änderungen bezüglich Ausgestaltung und Details daran vorgenommen werden können, ohne vom Wesen und Bereich der Erfindung, wie durch die angefügten Ansprüche definiert, abzuweichen. Der Bereich der Erfindung wird somit durch die angefügten Ansprüche bestimmt, und es ist daher beabsichtigt, dass sämtliche Änderungen, welche unter den Wortsinn der Ansprüche fallen, umfasst werden.

### Bezugszeichenliste

- 1: Ablaufdiagramm
- 2: Vorrichtung
- 21: erster Empfänger
- 22: erster Prozessor
- 23: zweiter Empfänger
- 24: zweiter Prozessor
- 25: Darstellungseinheit
- 26: Anzeigeeinheit
- 3: Vorrichtung
- 31: erste Recheneinheit
- 32: Grafikeinheit
- 33: zweite Recheneinheit
- 34: Mischer
- 35: Monitor
- 36: Stromversorgung
- 37: Datenbus
- 38: nicht-sicherheitskritische Daten
- 39: sicherheitskritische Daten
- 4: Anzeigevorrichtung
- 41: erster Displaybereich
- 42: zweiter Displaybereich
- 43: dritter Displaybereich
- 44: vierter Displaybereich
- 5: Anzeigevorrichtung
- 51: erstes Display
- 52: zweites Displays
- 53: drittes Display

## Patentansprüche

1. Verfahren zur gemeinsamen Darstellung sicherheitskritischer und nicht-sicherheitskritischer Informationen auf einer Anzeigeeinheit eines Fahrzeugs, umfassend:
Empfangen von nicht-sicherheitskritischen Informationen (10) und Erzeugen wenigstens einer grafischen Präsentation der nicht-sicherheitskritischen Informationen (11);
Empfangen von sicherheitskritischen Informationen (12) und Erzeugen wenigstens einer grafischen Präsentation der sicherheitskritischen Informationen (13);
Darstellen der Präsentationen sicherheitskritischer und nicht-sicherheitskritischer Informationen auf der Anzeigeeinheit, wobei die Darstellung wenigstens zwei Darstellungsebenen aufweist (14);
wobei die Präsentation der nicht-sicherheitskritischen Informationen in Blickrichtung des Betrachters auf einer hinteren der wenigstens zwei Darstellungsebenen dargestellt wird und die Präsentation der sicherheitskritischen Informationen auf einer vorderen Darstellungsebene dargestellt wird; und
Erstellen eines Gesamtbildes aus der hinteren Darstellungsebene mit der Präsentation der nicht-sicherheitskritischen Informationen und der vorderen Darstellungsebene mit der Präsentation der sicherheitskritischen Informationen;
Überprüfen des Gesamtbildes bei der Darstellung der sicherheitskritischen Informationen auf aufgetretene Bilder; Sicherstellen der Erkennbarkeit der Präsentation der sicherheitskritischen Informationen durch Bildüberprüfung,
wobei jedes einzelne Bild eines anzuzeigenden Bildstroms überprüft wird;
Überprüfen des Bereichs, in dem die sicherheitskritischen Informationen dargestellt werden sollen, auf Kontraste und/oder Helligkeiten;
wobei überprüft wird, ob bei einer wenigstens teilweisen Überlagerung die Präsentation der nicht-sicherheitskritischen Informationen von der Präsentation der sicherheitskritischen Informationen, die sicherheitskritischen Informationen erkennbar sind (15);
wobei, wenn bei der Überprüfung festgestellt wird, dass die Präsentation der nicht-sicherheitskritischen Informationen von der Präsentation der sicherheitskritischen Informationen überlagert wird, wenigstens die überlagernden Teile der Präsentation der sicherheitskritischen Informationen derart angepasst werden, dass die sicherheitskritischen Informationen erkennbar sind.

2. Verfahren nach einem Anspruch 1,
wobei wenigstens Teile der Präsentation der sicherheitskritischen Informationen derart angepasst werden, indem die grafische Präsentation der überlagernden Teile als solche verändert wird.

3. Verfahren nach einem Anspruch 2,
wobei die Veränderung der grafischen Präsentation durch eine Farbänderung, eine Linienänderung, eine Größenänderung, eine Kontraständerung und/oder eine Änderung der Darstellungsfrequenz erfolgt.

4. Verfahren nach einem der vorherstehenden Ansprüche,
wobei die sicherheitskritischen Informationen fahrzeugkritische Informationen enthalten und wobei die nicht-sicherheitskritischen Informationen navigationskritische und/oder missionskritische Informationen enthalten.

5. Verfahren nach einem der vorherstehenden Ansprüche,
wobei das Verfahren weiter den Schritt aufweist, dass die sicherheitskritischen Informationen und die nicht-sicherheitskritischen Informationen gemeinsam empfangen werden und nach vorbestimmten Kriterien in die sicherheitskritischen Informationen und die nicht-sicherheitskritischen Informationen getrennt werden.

6. Anzeigevorrichtung (2) zur gemeinsamen Darstellung sicherheitskritischer und nicht-sicherheitskritischer Informationen auf einer Anzeigeeinheit (2), aufweisend:
wenigstens einen ersten Empfänger (21), eingerichtet zum Empfangen von nicht-sicherheitskritischen Informationen;
wenigsten einen ersten Prozessor (22), eingerichtet zum Erzeugen wenigstens einer Präsentation der nicht-sicherheitskritischen Informationen;
wenigstens einen zweiten Empfänger (23), eingerichtet zum Empfangen von sicherheitskritischen Informationen;
wenigsten einen zweiten Prozessor (24), eingerichtet zum Erzeugen wenigstens einer Präsentation der sicherheitskritischen Informationen;
eine Darstellungseinheit (25), eingerichtet zum gemeinsamen Darstellen der Präsentationen sicherheitskritischer und nicht-sicherheitskritischer Informationen auf der Anzeigeeinheit (26), wobei die Darstellung wenigstens zwei Darstellungsebenen aufweist;
wobei die Präsentation der nicht-sicherheitskritischen Informationen in Blickrichtung eines Betrachters auf einer hinteren der wenigstens zwei Darstellungsebenen dargestellt ist und die Präsentation der sicherheitskritischen Informationen auf einer vorderen Darstellungsebene dargestellt ist; und
einen Mischer (34), eingerichtet zum Erstellen eines Gesamtbildes aus der hinteren Darstellungsebene mit der Präsentation der nicht-sicherheitskritischen Informationen und der vorderen Darstellungsebene mit der Präsentation der sicherheitskritischen Informationen;
wobei der Mischer (34) eingerichtet ist, das Gesamtbild bei der Darstellung der sicherheitskritischen Informationen auf aufgetretene Bilder zu überprüfen;
wobei der Mischer (34) dazu ausgeführt ist, die Erkennbarkeit der Präsentation der sicherheitskritischen Informationen durch Bildüberprüfung sicherzustellen, wobei jedes einzelne Bild eines anzuzeigenden Bildstroms überprüft wird;
wobei der Mischer (34) einen Überlagerungsmechanismus bereitstellt, wobei der Überlagerungsmechanismus die Überprüfung des Bereichs, in dem die sicherheitskritischen Informationen dargestellt werden sollen, auf Kontraste und/oder Helligkeiten umfasst;
wobei der zweite Prozessor eingerichtet ist, zu überprüfen, ob bei einer wenigstens teilweisen Überlagerung die Präsentation der nicht-sicherheitskritischen Informationen von der Präsentation der sicherheitskritischen Informationen, die sicherheitskritischen Informationen erkennbar sind;
wobei der zweite Prozessor ein Grafikprozessor und/oder Videoprozessor ist, der eingerichtet ist, wenn wenigstens Teile der Präsentation der nicht-sicherheitskritischen Informationen von der Präsentation der sicherheitskritischen Informationen überlagert sind, wenigstens die überlagernden Teile der Präsentation der sicherheitskritischen Informationen derart anzupassen, dass die sicherheitskritischen Informationen erkennbar sind.

7. Anzeigevorrichtung nach Anspruch 6,
wobei der zweite Prozessor ein DAL-A und/oder DAL-B sicherheitszertifizierter Prozessor ist.

8. Anzeigevorrichtung nach Anspruch 6,
wobei der zweite Prozessor eingerichtet ist, Teile der Präsentation der sicherheitskritischen Informationen derart anzupassen, indem die grafische Präsentation der überlagernden Teile als solche verändert ist.

9. Anzeigevorrichtung nach Anspruch 8,
wobei der zweite Prozessor eingerichtet ist, die grafische Präsentation durch eine Farbänderung, eine Linienänderung, eine Größenänderung, eine Kontraständerung und/oder eine Änderung der Darstellungsfrequenz anzupassen.

10. Anzeigevorrichtung nach einem der Ansprüche 6 bis 9,
wobei die sicherheitskritischen Informationen fahrzeugkritische Informationen enthalten und wobei die nicht-sicherheitskritischen Informationen navigationskritische und/oder missionskritische Informationen enthalten.

11. Anzeigevorrichtung nach einem der Ansprüche 6 bis 10,
weiter aufweisend wenigstens einen dritten Prozessor, der eingerichtet ist, eine Mehrzahl von unterschiedlichen Informationen von dem Fahrzeug zu empfangen, die empfangenen Informationen nach vorbestimmten Kriterien in die sicherheitskritischen Informationen und die nicht-sicherheitskritischen Informationen zu kategorisieren und entsprechende der Kategorisierung an die Empfänger für sicherheitskritische Informationen und nicht-sicherheitskritische Informationen weiterzuleiten.

12. Fahrzeug aufweisend,
eine Anzeigevorrichtung nach einem der Ansprüche 6 bis 11.

13. Fahrzeug nach Anspruch 12,
wobei das Fahrzeug ein Luftfahrzeug ist und wobei die Anzeigevorrichtung im Cockpit des Luftfahrzeugs angeordnet ist.

## Claims

1. Method for collectively depicting safety-critical and non-safety-critical information on a display unit of a vehicle, comprising:
receiving non-safety-critical information (10) and producing at least one graphical presentation of the non-safety-critical information (11);
receiving safety-critical information (12) and producing at least one graphical presentation of the safety-critical information (13);
depicting the presentations of safety-critical and non-safety-critical information on the display unit,
wherein the depiction has at least two depiction planes (14);
wherein the presentation of the non-safety-critical information is depicted on a posterior instance of the at least two depiction planes in the line of vision of the observer and the presentation of the safety-critical information is depicted on an anterior depiction plane; and
creating an overall image from the posterior depiction plane with the presentation of the non-safety-critical information and the anterior depiction plane with the presentation of the safety-critical information;
checking the overall image, during depiction of the safety-critical information, for images that have appeared;
ensuring the discernibility of the presentation of the safety-critical information by image checking, wherein each individual image in an image stream to be displayed is checked;
checking the area in which the safety-critical information is supposed to be depicted for contrasts and/or brightnesses;
wherein a check is performed to determine whether the safety-critical information is discernible if the presentation of the non-safety-critical information is at least partially overlapped by the presentation of the safety-critical information (15);
wherein, if the check establishes that the presentation of the non-safety critical information is overlapped by the presentation of the safety-critical information, at least the overlapping portions of the presentation of the safety-critical information are adapted such that the safety-critical information is discernible.

2. Method according to one Claim 1,
wherein at least portions of the presentation of the safety-critical information are adapted such by virtue of the graphical presentation of the overlapping portions being altered as such.

3. Method according to one Claim 2,
wherein the graphical presentation is altered by a colour change, a line change, a size change, a contrast change and/or a change of depiction frequency.

4. Method according to one of the preceding claims, wherein the safety-critical information contains vehicle-critical information and wherein the non-safety-critical information contains navigation-critical and/or mission-critical information.

5. Method according to one of the preceding claims, wherein the method further has the step that the safety-critical information and the non-safety-critical information are received collectively and are separated into the safety-critical information and the non-safety-critical information according to predetermined criteria.

6. Display apparatus (2) for collectively depicting safety-critical and non-safety-critical information on a display unit (2), having:
at least one first receiver (21), configured to receive non-safety-critical information;
at least one first processor (22), configured to produce at least one presentation of the non-safety-critical information;
at least one second receiver (23), configured to receive safety-critical information;
at least one second processor (24), configured to produce at least one presentation of the safety-critical information;
a depiction unit (25), configured to collectively depict the presentations of safety-critical and non-safety-critical information on the display unit (26),
wherein the depiction has at least two depiction planes;
wherein the presentation of the non-safety-critical information is depicted on a posterior instance of the at least two depiction planes in the line of vision of an observer and the presentation of the safety-critical information is depicted on an anterior depiction plane; and
a mixer (24), configured to create an overall image from the posterior depiction plane with the presentation of the non-safety-critical information and the anterior depiction plane with the presentation of the safety-critical information;
wherein the mixer (34) is configured to check the overall image, during depiction of the safety-critical information, for images that have appeared;
wherein the mixer (34) is designed to ensure the discernibility of the presentation of the safety-critical information by image checking, wherein each individual image in an image stream to be displayed is checked;
wherein the mixer (34) provides an overlap mechanism,
wherein the overlap mechanism comprises the checking of the area in which the safety-critical information is supposed to be depicted for contrasts and/or brightnesses;
wherein the second processor is configured to check whether the safety-critical information is discernible if the presentation of the non-safety critical information is at least partially overlapped by the presentation of the safety-critical information;
wherein the second processor is a graphics processor and/or video processor configured so as, if at least portions of the presentation of the non-safety-critical information are overlapped by the presentation of the safety-critical information, to adapt at least the overlapping portions of the presentation of the safety-critical information such that the safety-critical information is discernible.

7. Display apparatus according to Claim 6,
wherein the second processor is a DAL-A and/or DAL-B safety-certified processor.

8. Display apparatus according to Claim 6,
wherein the second processor is configured to adapt portions of the presentation of the safety-critical information such by virtue of the graphical presentation of the overlapping portions being altered as such.

9. Display apparatus according to Claim 8,
wherein the second processor is configured to adapt the graphical presentation by a colour change, a line change, a size change, a contrast change and/or a change of depiction frequency.

10. Display apparatus according to one of Claims 6 to 9,
wherein the safety-critical information contains vehicle-critical information and wherein the non-safety-critical information contains navigation-critical and/or mission-critical information.

11. Display apparatus according to one of Claims 6 to 10,
further having at least one third processor configured to receive a plurality of different pieces of information from the vehicle, to categorize the received information into the safety-critical information and the non-safety-critical information according to predetermined criteria and to forward said information to the receivers for safety-critical information and non-safety-critical information in accordance with the categorization.

12. Vehicle having
a display apparatus according to one of Claims 6 to 11.

13. Vehicle according to Claim 12,
wherein the vehicle is an aircraft and wherein the display apparatus is arranged in the cockpit of the aircraft.

## Revendications

1. Procédé de représentation commune d'informations critiques en termes de sécurité et non critiques en termes de sécurité sur une unité d'affichage d'un véhicule, comprenant :
la réception d'informations non critiques en termes de sécurité (10) et la génération d'au moins une présentation graphique des informations non critiques en termes de sécurité (11) ;
la réception d'informations critiques en termes de sécurité (12) et la génération d'au moins une présentation graphique des informations critiques en termes de sécurité (13) ;
la représentation des présentations d'informations critiques en termes de sécurité et non critiques en termes de sécurité sur l'unité d'affichage, la représentation présentant au moins deux plans de représentation (14) ;
la présentation des informations non critiques en termes de sécurité étant représentée dans le sens d'observation de l'observateur sur un plan de représentation arrière parmi les au moins deux plans de représentation et la présentation des informations critiques en termes de sécurité étant représentée sur un plan de représentation avant ; et
la création d'une image globale à partir du plan de représentation arrière avec la présentation des informations non critiques en termes de sécurité et du plan de représentation avant avec la présentation des informations critiques en termes de sécurité ;
le contrôle de l'image globale lors de la représentation des informations critiques en termes de sécurité au niveau des images produites ;
la vérification de la visibilité de la présentation des informations critiques en termes de sécurité par contrôle des images, chaque image individuelle d'un flux d'images à afficher étant contrôlée ;
le contrôle de la zone, dans laquelle les informations critiques en termes de sécurité doivent être représentées, au niveau des contrastes et/ou des luminosités ; et
étant vérifié si, en cas de recouvrement au moins partiel de la présentation des informations non critiques en termes de sécurité par la présentation des informations critiques en termes de sécurité, les informations critiques en termes de sécurité sont détectables (15) ;
dans le cas où il est constaté, lors du contrôle, que la présentation des informations non critiques en termes de sécurité est recouverte par la présentation des informations critiques en termes de sécurité, au moins les parties qui sont en recouvrement de la présentation des informations critiques en termes de sécurité sont adaptées de manière à ce que les informations critiques en termes de sécurité soient détectables.

2. Procédé selon une revendication 1,
dans lequel au moins les parties de la présentation des informations critiques en termes de sécurité sont adaptées de telle sorte en modifiant la présentation graphique des parties en recouvrement en tant que telles.

3. Procédé selon une revendication 2,
dans lequel la modification de la présentation graphique se fait par une modification de couleur, une modification de ligne, une modification de taille, une modification de contraste et/ou une modification de fréquence de représentation.

4. Procédé selon une des revendications précédentes, dans lequel les informations critiques en termes de sécurité contiennent des informations critiques en termes de véhicule et les informations non critiques en termes de sécurité contiennent des informations critiques en termes de navigation et/ou critiques en termes de mission.

5. Procédé selon une des revendications précédentes, le procédé présentant en outre l'étape consistant en ce que les informations critiques en termes de sécurité et les informations non critiques en termes de sécurité sont reçues ensemble et divisées en fonction de critères prédéfinis en informations critiques en termes de sécurité et en informations non critiques en termes de sécurité.

6. Dispositif d'affichage (2) pour la représentation commune d'informations critiques en termes de sécurité et non critiques en termes de sécurité sur une unité d'affichage (2), présentant :
au moins un premier récepteur (21) conçu pour recevoir des informations non critiques en termes de sécurité ;
au moins un premier processeur (22) conçu pour générer au moins une présentation des informations non critiques en termes de sécurité ;
au moins un second récepteur (23) conçu pour recevoir des informations critiques en termes de sécurité ;
au moins un deuxième processeur (24) conçu pour générer au moins une présentation des informations critiques en termes de sécurité ;
une unité de représentation (25) conçue pour représenter ensemble les présentations des informations critiques en termes de sécurité et non critiques en termes de sécurité sur l'unité d'affichage (26), la représentation présentant au moins deux plans de représentation ;
la présentation des informations non critiques en termes de sécurité étant représentée dans le sens d'observation d'un observateur sur un plan de représentation arrière parmi les au moins deux plans de représentation et la présentation des informations critiques en termes de sécurité étant représentée sur un plan de représentation avant ; et
un mélangeur (34) conçu pour créer une image globale à partir du plan de représentation arrière avec la présentation des informations non critiques en termes de sécurité et du plan de représentation avant avec la présentation des informations critiques en termes de sécurité ;
le mélangeur (34) étant conçu pour contrôler l'image globale lors de la représentation des informations critiques en termes de sécurité au niveau des images produites ;
le mélangeur (34) étant réalisé de manière à garantir la visibilité de la présentation des informations critiques en termes de sécurité par contrôle des images, chaque image individuelle d'un flux d'images à afficher étant contrôlée ;
le mélangeur (34) mettant à disposition un mécanisme de recouvrement, le mécanisme de recouvrement comprenant le contrôle de la zone, dans laquelle les informations critiques en termes de sécurité doivent être représentées, au niveau des contrastes et/ou des luminosités ; et
le deuxième processeur étant conçu pour contrôler si, dans le cas d'un recouvrement au moins partiel de la présentation des informations non critiques en termes de sécurité par la présentation des informations critiques en termes de sécurité, les informations critiques en termes de sécurité sont détectables ;
le deuxième processeur étant un processeur graphique et/ou un processeur vidéo qui est conçu pour, dans le cas où au moins des parties de la présentation des informations non critiques en termes de sécurité sont recouvertes par la présentation des informations critiques en termes de sécurité, adapter au moins les parties en recouvrement de la présentation des informations critiques en termes de sécurité de manière à ce que les informations critiques en termes de sécurité soient détectables.

7. Dispositif d'affichage selon la revendication 6, dans lequel le deuxième processeur est un processeur DAL-A et/ou DAL-B à sécurité certifiée.

8. Dispositif d'affichage selon la revendication 6, dans lequel le deuxième processeur est conçu pour adapter des parties de la présentation des informations critiques en termes de sécurité de telle sorte en modifiant la présentation graphique des parties en recouvrement en tant que telles.

9. Dispositif d'affichage selon la revendication 8, dans lequel le deuxième processeur est conçu pour adapter la présentation graphique par une modification de couleur, une modification de ligne, une modification de taille, une modification de contraste et/ou une modification de fréquence de représentation.

10. Dispositif d'affichage selon une des revendications 6 à 9,
dans lequel les informations critiques en termes de sécurité contiennent des informations critiques en termes de véhicule et les informations non critiques en termes de sécurité contiennent des informations critiques en termes de navigation et/ou critiques en termes de mission.

11. Dispositif d'affichage selon une des revendications 6 à 10,
présentant en outre au moins un troisième processeur qui est conçu pour recevoir une pluralité d'informations différentes de la part du véhicule, catégoriser les informations reçues en fonction de critères prédéfinis en informations critiques en termes de sécurité et en informations non critiques en termes de sécurité et, en fonction de la catégorisation, les retransmettre aux destinataires des informations critiques en termes de sécurité et des informations non critiques en termes de sécurité.

12. Véhicule présentant
un dispositif d'affichage selon une des revendications 6 à 11.

13. Véhicule selon la revendication 12,
ce véhicule étant un véhicule aéronautique et le dispositif d'affichage étant disposé dans le cockpit du véhicule aéronautique.
